# EUROPEAN PATENT SPECIFICATION

(11) **EP 1 425 353 B1**
(45) Date of publication and mention of the grant of the patent: **19.10.2005**
(21) Application number: 02767383.9
(22) Date of filing: 13.08.2002
(51) Int. Cl.: C09D 5/12, C09D 1/00, C09D 1/02, C09D 5/00

(54) **COATING COMPOSITION FOR METAL SUBSTRATES**
BESCHICHTUNGSZUSAMMENSETZUNG FÜR METALLSUBSTRATE
COMPOSITION DE REVETEMENT POUR SUBSTRATS METALLIQUES

(30) Priority: 11.09.2001 WO PCT/EP01/10552; 13.09.2001 WO PCT/EP01/10635; 07.01.2002 EP 02250068
(43) Date of publication of application: 09.06.2004
(73) Proprietor: Akzo Nobel Coatings International B.V., 6824 BM Arnhem (NL)
(72) Inventor: JACKSON, Paul, Anthony, County Durham DH2 3TD (GB); DAVIES, Gerald, Howard, Newcastle-upon-Tyne NE2 2HD (GB)
(74) Representative: Schalkwijk, Pieter Cornelis
(86) International application number: PCT/EP2002/009119
(87) International publication number: WO 2003/022940

(56) References cited:
- WO-A-00/55260
- US-A- 3 721 574

## Description

This invention relates to a coating composition that can be used for the coating of metal substrates, for example steel substrates. In particular, it relates to a coating composition for semi-finished steel products which are subsequently to be fabricated by heat-intensive processes and overcoated. Such semi-finished steel products are used in the shipbuilding industry and for other large-scale structures such as oil production platforms and include steel plates, for example of thickness 6 to 75 mm, bars, girders and various steel sections used as stiffening members. The most important heat-intensive process is welding; substantially all such semi-finished steel products are welded. Other important heat-intensive processes are cutting, for example oxy-fuel cutting, plasma cutting or laser cutting, and heat fairing, where the steel is bent into shape while being heated. These steel products are often exposed to the weather during storage before and during construction, and they are generally coated with a coating called a "shop primer" or "pre-construction coating" to avoid corrosion of the steel occurring before the steel construction, e.g. a ship, is given its full coating of anticorrosive paint, thereby avoiding the problem of having to overcoat or remove steel corrosion products. In most big shipyards, the shop primer is applied as one of several treatments carried out on a production line in which the steel is for example preheated, shot- or grit-blasted to remove millscale and corrosion products, shop primed, and passed through a drying booth. Alternatively, the shop primer can be applied by a trade coater or steel supplier before the steel is delivered to the shipyard or other construction site.

Although the main purpose of the shop primer is to provide temporary corrosion protection during construction, it is preferred by shipbuilders that the shop primer does not need to be removed but can remain on the steel during and after fabrication. Steel coated with the shop primer thus needs to be weldable without removal of the shop primer and to be overcoatable with the types of protective anti-corrosive coatings generally used on ships and other steel constructions, with good adhesion between the primer and the subsequently applied coating. The shop primed steel should preferably be weldable without any significant detrimental effect on the quality of the weld or on the speed of the welding process and should be sufficiently resistant to heat for the shop primer to retain its anticorrosive properties in areas heated during fairing or during welding of the opposite face of the steel.

Commercially successful shop primers available today are solvent borne coatings based on prehydrolyzed tetraethyl orthosilicate binders and zinc powder. Such coatings contain a large proportion of volatile organic solvent, typically about 650 grams per litre, to stabilize the paint binder and to enable the product to be applied as a thin film, typically of about 20 microns thick. Release of volatile organic solvent can be harmful to the environment and is regulated by legislation in many countries. There is a need for a shop primer which releases no, or much less, volatile organic solvent. Examples of such coatings are described in US-A-4,888,056 and JP-A-7-70476.

JP-A-6-200188 is concerned with shop primer coatings and mentions the possibility of using an aqueous alkali silicate salt type binder. Coatings comprising an aqueous alkali metal silicate and zinc powder are also proposed in GB-A-1226360, GB-A-1007481, GB-A-997094, US-A-4,230,496, and JP-A-55-106271. Alkali silicate binders for anticorrosive coatings are also mentioned in US-A-3,522,066, US-A-3,620,784, US-A-4,162,169, and US-A-4,479,824. In EP-A-295 834 coatings containing a mixture of alkali metal silicate with a minor amount of colloidal silica, Al₂O₃ powder as filler, and metal powder as toughening agent are mentioned. We have found that primer coatings based on an aqueous alkali silicate binder containing zinc powder can give adequate corrosion protection and allow the steel surfaces they cover to be welded, but give rise to problems when overcoated. The aqueous silicates contain a large quantity of alkali metal cations required to keep the silicate in aqueous solution and these ions are still present in the coating after it has dried. We have found that if primer coatings having these large quantities of alkali metal ions are overcoated with any conventional organic coating and then immersed in water, blistering (local delamination of the coating) occurs. We have performed tests which show that this problem can be reduced if the coating is weathered outside for some time after application of the shop primer or washed prior to overcoating. However, these processes are not compatible with use in today's high-productivity shipyards.

Aqueous silica sols having a very low alkali metal ion content are available commercially but coatings based on the conventionally used large sols normally have very poor (initial) film strength in terms of adhesion, cohesion, hardness, and resistance to abrasion and water. These poor physical properties of the coating make it susceptible to damage during handling or further processing. This brings the potential requirement of significant coating repair with major cost implications. Suggested improvements to silica sol coatings are described in US-A-3,320,082, which adds a water-immiscible organic amine, GB-A-1541022, which adds a water-soluble acrylamide polymer, GB-A-1485169, which adds a quaternary ammonium or alkali metal silicate, and JP-A-55-100921, which adds clay materials and/or metal oxides such as Al₂O₃, and aluminium biphosphate and/or ethyl silicate. However, such coatings have not achieved physical properties similar to those of coatings based on alkali metal silicates. Coatings based on silica sols show low levels of blistering when overcoated/immersed. Although the water-soluble salt content and osmotic pressure are low, blistering can still occur, as due to its poor physical properties the coating exhibits little resistance to blister initiation/growth.

There is a need for a water based shop primer of low alkali metal ion content which has improved adhesion to substrates and improved film strength in terms of the properties discussed above to resist blister initiation and growth. Further, there is a need for a blister-free water based shop primer showing fast development of the physical coating properties after application to enable handling and further processing of the substrate without the risk of damaging the coating.

It has been found that the ratio of the pigment volume concentration (PVC) to the critical pigment volume concentration (CPVC) has a significant impact on the film properties. In addition, the speed of property development of the film can be adjusted by altering the PVC / CPVC ratio.

The pigment volume concentration (PVC) is the volume percentage of pigment in the dry paint film. The critical pigment volume concentration (CPVC) is normally defined as the pigment volume concentration where there is just sufficient binder to provide a completely adsorbed layer of binder on the pigment surfaces and to fill all the interstices between the particles in a close-packed system. The critical pigment volume concentration can be determined by wetting out dry pigment with just sufficient linseed oil to form a coherent mass. This method yields a value known as the "oil absorption", from which the critical pigment volume concentration can be calculated. The method for determining the oil absorption is described in British Standard 3483 (BS3483).

US-A-3,721,574 suggests coatings containing a mixture of alkali metal silicate with a minor amount of colloidal silica, said colloidal silica preferably being Al₂O₃ modified. Also coatings containing a mixture of alkali metal silicate with a minor amount of colloidal silica, and zinc dust are mentioned. In the zinc-modified coatings, preferably a mixture of alkali metal silicate with a minor amount of non-modified colloidal silica is employed. In the Examples, the zinc dust is employed in extremely high proportions. This results in the formation of films containing about 95 percent by weight of zinc in the dried coating. However, such a high zinc level has a detrimental effect on the weldability of the coating. Thus, such coatings are not suitable for use as shop primers for semi-finished steel products which are subsequently to be faired or welded and overcoated. US-A-3,721,574 does not make reference to the PVC / CPVC ratio of the coatings, neither for the zinc-free, nor for the zinc-comprising coatings. The document does not disclose that the PVC / CPVC ratio has a significant impact on the film properties and on the speed of property development of the film.

WO 00/55260 discloses a coating composition comprising a silica or silicate binder and zinc powder and/or a zinc alloy. The binder has a SiO₂/M₂O mole ratio, wherein M represents the total of alkali metal and ammonium ions, of at least 6:1. The document teaches that the pigment volume concentration of the coating should be at least equal to the critical pigment volume concentration. It has now been found that the film properties of the coating composition and the speed of property development of the film can be improved by using the coating composition according to the present invention when the binder comprises silica or silicate particles having an average size larger than 10 nm.

The composition according to the present invention, which can be used for coating a metal substrate which is intended to be fabricated and overcoated, has a PVC / CPVC ratio smaller than 1. The coating comprises a silica binder comprising an aqueous silica sol and, optionally, a minor amount of alkali metal silicate, with the silica and/or silicate particles in the composition having an average size larger than 10 nm. Said binder has a SiO₂/M₂O mole ratio of at least 6:1, wherein M represents the total of alkali metal and ammonium ions. For the purpose of the present application, a minor amount of alkali metal silicate means that the weight ratio of alkali metal silicate to silica sol in the composition is smaller than 0.5, preferably smaller than 0.25, more preferably smaller than 0.1.

It has been found that improved early coating properties can be obtained using coatings with a PVC between 35% and 65%, more preferably between 40% and 55%. In a coating having a PVC below 35% and comprising only zinc as pigment, there is insufficient zinc to provide effective corrosion protection on outdoor exposure when more than 6 months' protection is required. When using coatings with a low zinc level, for instance between 10 and 40%, acceptable corrosion protection can be obtained when one or more secondary corrosion inhibitors are added or when a conductive extender, such as di-iron phosphide, is added.

The primer coating preferably contains zinc powder which preferably has a volume averaged mean particle size of 2 to 12 microns, and most preferably such zinc powder is the product commercially obtainable as zinc dust having a mean particle size of 2 to 8 microns. The zinc powder protects the steel by a galvanic mechanism and may also form a protective layer of zinc corrosion products, enhancing the corrosion protection given by the coating.
All or part of the zinc powder can be replaced by a zinc alloy. The amount of zinc powder and/or alloy in the coating generally is at least 10% and can be up to 90% by volume of the coating, on a dry film basis. The zinc powder and/or alloy can be substantially the whole of the pigmentation of the coating or can for example comprise up to 70%, for example 25 to 55%, by volume of the coating, on a dry film basis, with the coating also containing an auxiliary corrosion inhibitor, for example a molybdate, phosphate, tungstate or vanadate, as described in US-A-5246488, ultrafine titanium dioxide as detailed in KR 8101300, and/or zinc oxide and/or a filler such as silica, calcined clay, alumina silicate, talc, barytes or mica. The amount of zinc powder and/or alloy in the coating preferably is between 35 and 60%, more preferably between 40 and 50%.

Other pigments can be used in conjunction with zinc-based pigments. Examples of these other non-zinc pigments include conductive extenders such as di-iron phosphide (Ferrophos® ), micaceous iron oxide, etc. Use of these conductive non-zinc pigments may allow a reduction of the zinc level while maintaining effective corrosion protection. To obtain optimum coating properties, extenders are preferably sufficiently dispersed in the coating composition. The types and sizes of the extenders used can be adjusted to obtain an adequate state of dispersion. For example, when the extender pigment Satintone® (ex Lawrence Industries) is selected, a mean particle size below 3 µm, preferably below 2 µm can be used.

The binder is most preferably based on an aqueous silica sol. Such sols are available from Akzo Nobel under the Registered Trademark "Bindzil" or from DuPont under the Registered Trademark "Ludox", although the literature concerning them emphasizes that conventional grades of colloidal silica are not good film formers. Various grades of sol are available having various colloidal silica particle sizes and containing various stabilizers. The particle size of the colloidal silica can for example be in the range 10 to 100 nm; particle sizes towards the lower end of this range, for example 10 to 22 nm, are preferred. In a composition according to the present invention, the binder more preferably has colloidal silica particles with an average particle size between 10 nm and 20 nm, even more preferably between 10 nm and 16 nm.

The silica sol preferably has a SiO₂/M₂O mole ratio of at least 10:1, more preferably of at least 25:1, even more preferably of at least 50:1, and can have a SiO₂/M₂O mole ratio of 200:1 or more. Further, it is possible to use a blend of two or more silica sols having a different SiO₂/M₂O mole ratio, wherein the SiO₂/M₂O mole ratio of the blend is at least 25:1. The sol can be stabilized by alkali, for example sodium, potassium, or lithium hydroxide or quaternary ammonium hydroxide, or by a water-soluble organic amine such as alkanolamine.

The silica sol can be blended with a minor amount of an alkali metal silicate, for example lithium silicate, sodium-lithium silicate or potassium silicate, or with ammonium silicate or a quaternary ammonium silicate. Other examples of suitable sol-silicate blends or mixtures can be found in US 4,902,442. The addition of an alkali metal or ammonium silicate may improve the initial film-forming properties of the silica sol, but the amount of alkali metal silicate should be low enough to have a SiO₂/M₂O mole ratio of the binder sol of at least 6:1, preferably of at least 8:1, and most preferably above 15:1. For the purpose of the present application, a minor amount of alkali metal silicate means that the weight ratio of alkali metal silicate to silica sol in the composition is smaller than 0.5, preferably smaller than 0.25, more preferably smaller than 0.1.

The silica sol preferably has a low level of agglomeration. This can be determined by asserting the S-value of the sol. The S-value can be measured and calculated as described by Iler & Dalton in *J. Phys. Chem.* Vol. 60 (1956), pp. 955-975. The silica content, the volume of the dispersed phase, the density, and the viscosity of the silica sol affect the S-value. A low S-value can be considered to indicate a high degree of particle aggregation or inter particle attraction. The silica sol used in the coating composition according to the present invention can have an S-value of 20-100%, preferably 30-90%, even more preferably 50-85%.

It has now been found that a silica sol having a low level of agglomeration gives also very good results in the systems and processes described in WO 00/55260, WO 00155261, WO 02/22745, WO 02/22746. For these systems and processes, the silica sol can have an S-value of 20-100%, preferably 30-90%, even more preferably 50-85%.

The silica sol can alternatively or additionally contain a dissolved or dispersed organic resin. The organic resin preferably is a latex, for example a styrene butadiene copolymer latex, a styrene acrylic copolymer latex, a vinyl acetate ethylene copolymer latex, a polyvinyl butyral dispersion, a silicone/siloxane dispersion, or an acrylic based latex dispersion. Examples of suitable latex dispersions that can be used include XZ 94770 and XZ 94755 (both ex Dow Chemicals), Airflex® 500, Airflex® EP3333 DEV, Airflex® CEF 52, and Flexcryl® SAF34 (all ex Air Products), Primal® E-330DF and Primal® MV23 LO (both ex Rohm and Haas), and Silres® MP42E, Silres® M50E, and SLM 43164 (all ex Wacker Chemicals). Water-soluble polymers such as acrylamide polymers can be used but are less preferred. The organic resin is preferably used at up to 30% by weight, more preferably 10-20% by weight, based on solid binder. Higher amounts of organic resin may cause weld porosity during subsequent welding. It was found that the addition of an organic resin improves the adhesion/cohesion as measured in the cross hatch test.

Alternatively, the silica sol can contain a silane coupling agent which contains alkoxysilane groups and an organic moiety containing a functional group such as an amino, epoxide or isocyanate group. The silane coupling agent preferably is an aminosilane such as gamma-aminopropyl triethoxy silane or gamma-aminopropyl trimethoxy silane, or a partial hydrolyzate thereof, although an epoxy silane such as gamma-glycidoxypropyl trimethoxy silane can also be used. The silane coupling agent preferably is present at up to 30% by weight, for example 1-20% by weight, based on solid binder.

The binder of the primer coating can additionally comprise an aqueous solution of an alkali metal or ammonium silicate stabilized by a siliconate substituted by at least one anionic group of lower pKa than silicic acid, such as a carboxylate or sulphonate group. Such a binder preferably is a solution having a SiO₂/M₂O mole ratio in the range 8:1 to 30:1 and a pH in the range 7 to 11.5 prepared by lowering the pH of a solution of silicate and siliconate by cation exchange. Thus the siliconate can be added at relatively low levels, for example at a mole ratio of 1:2 to 1:20, to a conventional 3.9:1 SiO₂/K₂O alkali silicate. The solids may then be reduced to improve ease of processing and to further improve stability. At this stage the solution has a pH of 12-12.5. The solution is ion-exchanged using a standard ion-exchange resin. K⁺ ions are replaced with H⁺ ions, reducing both the alkali content of the binder and the pH. Without the presence of the siliconate the silicate would gel on reducing the pH. Clear, stable solutions with a pH as low as 8 have been obtained. The resultant binder has a SiO₂/K₂O mole ratio typically in the range 8-20:1 and can be concentrated if so desired to increase the solids. The binder is a clear, stable solution and is stable in the presence of zinc, but coatings based on these ion-exchanged binders have relatively poor film strength compared to coatings based on alkali silicate binders.

Preferably, a binder having a pH of 9 to 11.5 is used, more preferably in the range 9.5 to 11. While we do not wish to be bound by any theory explaining the pH effect on the film properties, it appears that an increased pH results in an increased amount of silica ions and/or silicate ions in solution. This seems to have the potential for effecting *in situ* gel reinforcement after the application of the coating composition. Additionally, pH adjustment can have a minor pot life-extending effect. When a commercially obtainable silica sol is used, a sol with a high pH can be selected and/or the pH of the sol can be adjusted. The pH can be adjusted, for example, by adding pH-influencing pot life extenders such as dimethyl amino ethanol (DMAE) or dilute sulphuric acid, or by adding sodium hydroxide. For example, commercially obtainable 22 nm silica sols normally have a pH of about 8.5-9. Increasing the pH of these sols to 10-11 markedly improves the rate of coating property development.

The solids content of the primer coating generally is at least 15% by volume and preferably in the range of 20 to 35% by volume. The volume solids content is the theoretical value calculated on the basis of all the components present in the coating composition. The coating preferably has a viscosity such that it can easily be applied by conventional coating applicators such as spray applicators, particularly airless spray or high volume low pressure (HVLP) spray applicators, to give a coating having a dry film thickness of less than 40 microns, preferably between 12 and 25 to 30 microns.

Optionally, the coating composition may comprise further additives well-known to the skilled person, e.g., thixotropes and/or rheology control agents (organo clays, xanthan gum, cellulose thickeners, polyether urea polyurethanes, (pyrogenic) silica, acrylics, etc.), defoamers (in particular when latex modifiers are present), and, optionally, secondary pot life extenders, such as chromates (for example sodium dichromate) or tertiary amines (for example triethylamine or dimethyl aminoethanol). Preferred thixotropes and/or rheology control agents include Bentone® EW (ex Elementis), which is a sodium magnesium silicate (organo clay), Bentolite® WH (ex Rockwood), which is a hydrous aluminium silicate, Laponite® RD (ex Rockwood), which is a hydrous sodium magnesium lithium silicate, HDK® -N20 (ex Wacker Chemie), which is a pyrogenic silica, and Rheolate® 425 (ex Elementis), which is a proprietary acrylic dispersion in water. Preferred defoamers include Foamaster® NDW (ex Cognis), Tego Foamex® 88 (ex Tego Chemie), and Dapro® 1760 (ex Elementis). It was found that other compounds which may be present in the coating composition for other reasons can also act as secondary pot life extenders. For example, the addition of molywhite anticorrosive pigments or styrene butadiene latex can lead to a minor extension of the pot life. Preferred secondary pot life extenders are tertiary amines, which offer a chromate-free option for pot life extension.

A longer pot life is also found for systems further comprising alumina. In this application, the concentration of alumina in the coating composition is given as the percentage by weight of Al₂O₃ based on the silica sol or silicate particles present in the composition. To obtain optimum properties, preference is given to the use of alumina-stabilized silica sols, for example an alumina-modified silica sol. In alumina-modified sols, the surface of the particles is modified by sodium aluminate bound to the particles. Preferably, the silica sol is modified with 0.05 to 2.5 wt.% of alumina, more preferably with 0.05 to 2.0 wt.% of alumina.

Normally, the coating system is provided as a two- (or more) component system where the components are thoroughly mixed prior to application of the coating. It is also possible to prepare the coating composition just prior to application of the coating, for example by adding and thoroughly mixing all components of the coating composition shortly before application. Such a process can also be referred to as on-line mixing of the components in the coating composition. This process is particularly suitable for coating compositions that have a limited pot life.

The development of properties can be accelerated by a post-treatment process in which the substrate can be treated with a solution which increases the film strength of the primer coating. Preferably, a metal substrate is primer coated with a coating according to the invention, and after the primer coating has dried to the extent that it is touch dry, it is treated with a film strengthening solution. Such a solution, which increases the film strength of the primer coating, can in general be an aqueous solution of an inorganic salt or a solution of material having reactive silicon-containing groups.

The development of properties can alternatively be accelerated by immersion of the optionally post-treated coated substrate in water, or by conditioning the optionally post-treated coated substrate in an atmosphere with a relative humidity of at least 50%, preferably at least 80%. Preferably, a metal substrate is primer coated with a coating according to the invention, and after the primer coating has dried to the extent that it is touch dry, it is immersed in water or alternatively kept in an atmosphere with a relative humidity of at least 50%, more preferably at least 80%. More preferably, a metal substrate is primer coated with a coating according to the invention, and after the primer coating has dried to the extent that it is touch dry, it is first treated with a film strengthening solution and then it is immersed in water or alternatively kept in an atmosphere with a relative humidity of at least 50%, more preferably at least 80%.

When fast drying is not an issue, it is possible to let a non-post-treated coating dry at low relative humidity, for instance between 25 and 50% relative humidity. The development of the coating properties will proceed less fast, but eventually good coating properties are obtained.

In a preferred embodiment, the coating composition according to the present invention is a water based shop primer for the coating of steel substrates which are intended to be fabricated and overcoated, said composition having a solid content of 20 - 40% by volume, and wherein the ratio of the pigment volume concentration to the critical pigment volume concentration is smaller than 1, comprising:
- an aqueous silica sol binder having a SiO₂/M₂O mole ratio of at least 6:1 and a pH between 9.5 and 11, wherein M represents the total of alkali metal and ammonium ions and wherein the optionally alumina modified silica particles have an average size between 10 nm and 16 nm,
- 10 - 55% by volume of the coating on a dry film basis of zinc powder and/or a zinc alloy having a mean particle size in the range 2 to 12 µm,
- 0 - 35% by weight, based on solid binder, of an organic resin,
- 0 - 30% by weight, based on solid binder, of a silane coupling agent,
- optionally non-zinc pigment(s), and
- optionally a pot life extender.

The invention will be elucidated with reference to the following examples. These are intended to illustrate the invention but are not to be construed as limiting in any manner the scope thereof.

The compounds used as starting material in the examples have the following origin:
- Ludox SM: a silica sol of concentration 30% by weight, average particle size 7 nm, SiO₂/Na₂O mole ratio 50:1, ex DuPont, pH 10.3
- Ludox HS-40: a silica sol of concentration 40% by weight, particle size 12 nm, SiO₂/Na₂O mole ratio 95:1, ex DuPont, pH 9.8
- Ludox TM-40: a silica sol of concentration 40% by weight, average particle size 22 nm, SiO₂/Na₂O mole ratio 225:1, ex DuPont, pH 8.8
- Bindzil 40/170: a silica sol of concentration 40% by weight, average particle size 20 nm, SiO₂/Na₂O mole ratio 160:1, ex Akzo Nobel (Eka Chemicals), pH 9.4
- Nyacol: a silica sol of concentration 40% by weight and average particle size 16 nm, SiO₂/Na₂O mole ratio 105:1, ex Akzo Nobel (Eka Chemicals), pH 9.8
- Nyacol Al: an alumina-modified version of Nyacol, pH 9.9
- XZ 94770: a styrene/butadiene organic latex of 50 vol.% solids, ex Dow Chemicals.
- Minex 20: a sodium potassium aluminum silicate extender pigment of 2.95 µm mean particle size, ex North Cape Minerals
- Zinc dust: a 7 µm mean particle size metal powder, ex Trident Alloys
- Molywhite 212: calcium zinc molybdate, an anticorrosive pigment of particle size 4.1 µm, ex Sherwin Williams
- Bentone EW: a sodium magnesium silicate thixotrope, ex Elementis

In the experiment, the silica sols were used as obtained, that is, having a pH as listed above, unless stated otherwise. When a pH is indicated that is different from the pH as listed above, the pH adjustment was carried out as follows:
(i) pH 9 was achieved by adding dilute sulphuric acid, having a pH of 1.5, to a stirred sol
(ii) pH 10 was achieved by adding sodium hydroxide, having a pH of 14, to a stirred sol
(iii) pH 11 was achieved by adding sodium hydroxide, having a pH of 14, to a stirred sol.

### Example 1

To determine the effect of varying the PVC in coatings comprising a 12 nm silica sol and having 40% zinc by volume in the dry film, several compositions having a solids concentration of about 28% by volume were prepared.
The composition used in Example 1 c was prepared from the following ingredients.

| Component | % by weight |
|---|---|
| Ludox HS-40 | 41.43 |
| Water | 14.77 |
| Zinc dust | 39.91 |
| Bentone EW | 0.20 |
| Molywhite 212 | 2.11 |
| Minex 20 | 1.58 |

For Examples 1a, 1b, 1d, and 1e compositions were prepared with varying PVC by adding or removing Molywhite 212 and Minex 20 to or from the composition of Example 1c.

The obtained primer coatings were applied to 15 cm x 10 cm steel panels at a dry film thickness of 15-20 µm at 35°C and 30% relative humidity. The primers were allowed to dry at 23°C, 60% RH and were tested for their physical properties 1 hour and 1 day after application. The results of the tests are shown in Table 1.

**Table 1**

| Ex. No. | PVC | Λ | MW 212 | Minex 20 | Mechanical properties 1 hour after application | | Mechanical properties 24 hours after application | |
|---|---|---|---|---|---|---|---|---|
| | | | | | Wet double rubs | Pencil Hardness | Wet double rubs | Pencil Hardness |
| 1a | 40 | 0.56 | 0 | 0 | 3 | <2B | 4 | <2B |
| 1b | 45 | 0.65 | 5 | 0 | 12 | <2B | 15 | 2B |
| 1c | 50 | 0.72 | 5 | 5 | 12 | <2B | 28 | B |
| 1d | 55 | 0.80 | 5 | 10 | 22 | 2B | 60 | 2H |
| 1e | 60 | 0.88 | 5 | 15 | 17 | B | 50 | 2H |
| 1f | 70 | 1.04 | 5 | 25 | 13 | HB | 30 | 2H |

### Example 2

To determine the effect of latex XZ 94770 in coatings comprising a 12 nm silica sol and having 40% zinc in the dry film, several compositions having a solids concentration of about 28% by volume were prepared. The shop primer compositions were prepared analogous to Examples 1a to 1f. The latex level in all compositions prepared for Example 2 was 20% by volume based on silica sol.
The composition used in Example 2c was prepared from the following ingredients.

| Component | % by weight |
|---|---|
| Ludox HS-40 | 34.99 |
| Water | 15.64 |
| Zinc dust | 42.19 |
| XZ 94770 | 3.08 |
| Bentone EW | 0.20 |
| Molywhite 212 | 2.23 |
| Minex 20 | 1.67 |

The obtained primer coatings were applied to 15 cm x 10 cm steel panels at a dry film thickness of 15-20 µm at 35°C and 30% relative humidity. The primers were allowed to dry at 23°C, 60% RH and were tested for their physical properties 1 hour, and 1 day after application. The results of the tests are shown in Table 2.

**Table 2**

| Ex. No. | PVC | Λ | MW 212 | Minex 20 | Mechanical properties 1 hour after application | | Mechanical properties 24 hours after application | |
|---|---|---|---|---|---|---|---|---|
| | | | | | Wet double rubs | Pencil Hardness | Wet double rubs | Pencil Hardness |
| 2a | 40 | 0.56 | 0 | 0 | 14 | HB | >>100 | H |
| 2b | 45 | 0.65 | 5 | 0 | 26 | 2H | >>100 | 3H |
| 2c | 50 | 0.72 | 5 | 5 | >100 | 2H | >>100 | 6H |
| 2d | 55 | 0.80 | 5 | 10 | >100 | 2H | >>100 | 6H |
| 2e | 60 | 0.88 | 5 | 15 | 65 | 2H | >>100 | 6H |
| 2f | 70 | 1.04 | 5 | 25 | 25 | 2H | >100 | 4H |

The results in Table 2 compared with those of Table 1 show that improved film properties can be obtained by adding latex to the composition. The fastest development of coating properties was obtained at PVC 50-55%.

### Example 3

To determine the effect of increasing latex levels in coatings comprising a 12 nm silica sol and having 40% zinc in the dry film, several compositions having a solids concentration of 28% by volume were prepared. The primer coatings had a pigment volume concentration of 50%, which is 0.72 times the critical pigment volume concentration.
The composition used in Example 3a was prepared from the following ingredients.

| Component | % by weight |
|---|---|
| Ludox HS-40 | 41.43 |
| Water | 14.77 |
| Zinc dust | 39.91 |
| Bentone EW | 0.20 |
| Molywhite 212 | 2.11 |
| Minex 20 | 1.58 |

For Examples 3b to 3d, compositions were prepared by reducing the amount of silica sol and adding latex XZ 94770 in increasing amounts.

The application and cure conditions were as used in the aforementioned examples. The primers were tested for their physical properties 1 hour and 1 day after application. The results of the tests are shown in Table 3. The amounts of silica sol and latex XZ 94770 given refer to the volume percentage in the dry film.

**Table 3**

| Ex. No. | Vol% Silica Sol | Vol% XZ 94770 | Mechanical properties 1 hour after application | | Mechanical properties 24 hours after application | |
|---|---|---|---|---|---|---|
| | | | Wet double rubs | Pencil Hardness | Wet double rubs | Pencil Hardness |
| 3a | 50 | 0 | 12 | <2B | 28 | B |
| 3b | 40 | 10 | >100 | 2H | >>100 | 6H |
| 3c | 30 | 20 | 75 | 2H | >>100 | 6H |
| 3d | 25 | 25 | 90 | 3H | >>100 | 6H |

### Examples 4-7

Several compositions having sol sizes above 12 nm and a pigment volume concentration of 50% (Λ=0.72) were prepared. All compositions contained 40% zinc, 5% Molywhite 212, 5% Minex 20, and 20 vol.% latex XZ 94770 based on silica sol. Additionally, one comparative example, Example 4¹, was carried out with 70% PVC (Λ=1.06).

The application and cure conditions were as used in the previous examples. The results of the tests are shown in Table 4.

**Table 4**

| Ex. No. | Silica sol | Sol size | Mechanical properties hour after application | | Mechanical properties 24 hours after application | |
|---|---|---|---|---|---|---|
| | | | Wet double rubs | Pencil Hardness | Wet double rubs | Pencil Hardness |
| 4 | Nyacol | 16 nm | 35 | HB | >>100 | 3H |
| 4¹ | Nyacol | 16 nm | 16 | HB | 47 | HB |
| 5 | Nyacol Al | 16 nm | 30 | HB | >>100 | H |
| 6 | Bindzil® 40/170 | 20 nm | 10 | HB | 60 | HB |
| 7 | Ludox® TM-40 | 22 nm | 7 | <2B | 40 | H |

| | | | | | | |
|---|---|---|---|---|---|---|
| ¹) Comparative example | | | | | | |

The examples show that for 16 nm sols fast development of coating properties can be obtained at PVC 50-55%. Additionally, the examples show that coating properties fall off on increasing the sol size.

### Example 8 and 9

Two primer coatings having a solids concentration of 28% by volume were prepared using blends of sols. Both primer coatings had a pigment volume concentration of 50%, which is 0.72 times the critical pigment volume concentration.
The primer coating used in Example 8 was prepared from the following ingredients, resulting in a coating with an average sol size of 10 nm.

| Component | % by weight |
|---|---|
| Ludox SM (7 nm) | 5.5 |
| Ludox HS-40 (12 nm) | 29.6 |
| XZ 94770 | 3.1 |
| Water | 15.5 |
| Bentone EW | 0.2 |
| Zinc | 42.2 |
| Molywhite 212 | 2.2 |
| Minex 20 | 1.7 |

The primer coating used in Example 9 was prepared from the following ingredients, resulting in a coating with an average sol size of 10 nm.

| Component | % by weight |
|---|---|
| Ludox SM (7 nm) | 6.8 |
| Nyacol (16 nm) | 30.0 |
| XZ 94770 | 3.1 |
| Water | 13.9 |
| Bentone EW | 0.2 |
| Zinc | 42.1 |
| Molywhite 212 | 2.2 |
| Minex 20 | 1.7 |

The obtained primer coatings were applied to 15 cm x 10 cm steel panels in a dry film thickness of 15-20 µm and allowed to dry at 35°C, 30% RH. Within 1 hour the primed substrates were stored at 60% RH. Subsequently, the coatings were tested for their physical properties 1 hour and 1 day after application. The results of the tests are shown in Table 5.

**Table 5**

| Example No. | Sol sizes in the blend | Mechanical properties 1 hour after application | | Mechanical properties 24 hours after application | |
|---|---|---|---|---|---|
| | | Wet double rubs | Pencil Hardness | Wet double rubs | Pencil Hardness |
| 8 | 7 nm / 12 nm. | 42 | HB | >>100 | H |
| 9 | 7 nm / 16 nm | 28 | HB | >>100 | H |

The results in Table 5 show that good film properties can be obtained using a blend of sols.

### Examples 10-13

Several compositions with varying pH and having a pigment volume concentration of 50% (Λ=0.72) were prepared. All compositions contained 40% zinc, 5% Molywhite 212, 8% Minex 20, and 20 vol.% latex based on silica sol.

The application and cure conditions used were the same as in Example 1. The results of the tests are shown in Tables 6, 7, 8, and 9.

**Table 6**

| Ex. No. | pH | Silica sol | Sol size | Mechanical properties 1 hour after application | | Mechanical properties 24 hours after application | |
|---|---|---|---|---|---|---|---|
| | | | | Wet double rubs | Pencil Hardness | Wet double rubs | Pencil Hardness |
| 10a | 9 | Ludox HS-40 | 12 nm | 9 | 2B | 9 | 2B |
| 11a | 9 | Nyacol | 16 nm | 5 | 2B | 5 | 2B |
| 12a | 9 | Bindzil 40/170 | 20 nm | 5 | 2B | 5 | 2B |
| 13a | 9 | Ludox TM-40 | 22 nm | 7 | <2B | 7 | <2B |

**Table 7**

| Ex. No. | pH | Silica sol | Sol size | Mechanical properties 1 hour after application | | Mechanical properties 24 hours after application | |
|---|---|---|---|---|---|---|---|
| | | | | Wet double rubs | Pencil Hardness | Wet double rubs | Pencil Hardness |
| 10b | 10 | Ludox HS-40 | 12 nm | 40 | B | >>100 | 2H |
| 11b | 10 | Nyacol | 16 nm | 35 | HB | >>100 | 3H |
| 12b | 10 | Bindzil 40/170 | 20 nm | 75 | H | >>100 | 3H |
| 13b | 10 | Ludox TM-40 | 22 nm | 6 | B | 60 | HB |

**Table 8**

| Ex. No. | pH | Silica sol | Sol size | Mechanical properties 1 hour after application | | Mechanical properties 24 hours after application | |
|---|---|---|---|---|---|---|---|
| | | | | Wet double rubs | Pencil Hardness | Wet double rubs | Pencil Hardness |
| 10c | 11 | Ludox HS-40 | 12 nm | >100 | HB | >>100 | 2H |
| 11c | 11 | Nyacol | 16 nm | 55 | H | >>100 | 3H |
| 12c | 11 | Bindzil 40/170 | 20 nm | 30 | HB | >>100 | HB |
| 13c | 11 | Ludox TM-40 | 22 nm | 15 | HB | 100 | H |

**Table 9**

| Ex. No. | pH | Silica sol | Sol size | Mechanical properties 1 hour after application | | Mechanical properties 24 hours after application | |
|---|---|---|---|---|---|---|---|
| | | | | Wet double rubs | Pencil Hardness | Wet double rubs | Pencil Hardness |
| 10d | >11 | Ludox HS-40 | 12 nm | >100 | 2H | >>100 | 4H |
| 13d | >11 | Ludox TM-40 | 22 nm | 15 | HB | 60 | HB |

From Tables 6-9 it becomes clear that reducing the pH of sols with an average particle size of 12-20 nm has an adverse effect on the (development of) coating properties. On the other hand, increasing the pH of the 22 nm sol improves the (rate of development of) coating properties.

## Claims

1. A composition for coating a metal substrate which is intended to be fabricated and overcoated, said composition comprising a silica binder, **characterized in that** the ratio of the pigment volume concentration to the critical pigment volume concentration of said composition is smaller than 1, and **in that** the binder comprises an aqueous silica sol and, optionally, a minor amount of alkali metal silicate, with the silica and/or silicate particles having an average size larger than 10 nm, and **in that** said binder has a SiO₂/M₂O mole ratio of at least 6:1, wherein M represents the total of alkali metal and ammonium ions.

2. A coating composition according to claim 1, **characterized in that** the pigment volume concentration is between 40 and 55%.

3. A coating composition according to claim 1 or 2, **characterized in that** the binder is a silica sol of SiO₂/M₂O mole ratio at least 25:1.

4. A coating composition according to any one of claims 1 to 3, **characterized in that** the binder comprises colloidal silica particles with an average particle size between 10 and 22 nm.

5. A coating composition according to claim 4, **characterized in that** the binder comprises colloidal silica particles with an average particle size between 10 and 16 nm.

6. A coating composition according to claim 5, **characterized in that** the aqueous silica sol has a pH in the range 9.5 to 11.

7. A coating composition according to any one of claims 1 to 6, **characterized in that** the primer coating further comprises 0 to 30% by weight of an organic resin, based on solid binder.

8. A coating composition according to claim 7, **characterized in that** the primer coating further comprises 10-20% by weight of an organic resin, based on solid binder.

9. A coating composition according to any one of claims 1 to 8, **characterized in that** the binder comprises an alumina surface-modified aqueous silica sol.

10. A coating composition according to claim 9, **characterized in that** the binder comprises 0.05 to 2.5 wt.% of alumina, calculated as the percentage by weight of Al₂O₃, based on the silica sol particles in the composition.

11. A coating composition according to any one of claims 1 to 10, **characterized in that** it is a water based shop primer.

12. A coating composition according to any one of claims 1 to 11, **characterized in that** the coating further comprises zinc powder and/or a zinc alloy.

13. Water based shop primer for the coating of steel substrates which are intended to be fabricated and overcoated, said composition having a solid content of 20 - 40% by volume, wherein the ratio of the pigment volume concentration to the critical pigment volume concentration is smaller than 1, comprising:
- an aqueous silica sol binder having a SiO₂/M₂O mole ratio of at least 6:1 and a pH between 9.5 and 11, wherein M represents the total of alkali metal and ammonium ions and wherein the optionally alumina modified silica particles have an average size between 10 nm and 16 nm,
- 10 - 55% by volume of the coating on a dry film basis of zinc powder and/or a zinc alloy having a mean particle size in the range 2 to 12 µm,
- 0 - 35% by weight, based on solid binder, of an organic resin,
- 0 - 30% by weight, based on solid binder, of a silane coupling agent,
- optionally non-zinc pigment(s), and
- optionally a pot life extender.

14. A process for primer coating a steel substrate wherein the metal is primer coated with a coating composition according to any one of claims 1-12 which is prepared using a silica sol of which the pH is adjusted to pH 9.5-11.

15. A process for primer coating a steel substrate wherein the metal is primer coated with a coating composition according to any one of claims 1-12 and wherein after the primer coating has dried to the extent that it is touch dry, it is optionally treated with a film strengthening solution.

16. A process for primer coating a steel substrate wherein the metal is primer coated with a coating composition according to any one of claims 1-12 and wherein after the primer coating has dried to the extent that it is touch dry, the coated substrate is immersed in water or alternatively kept in an atmosphere with a relative humidity of at least 50%.

## Patentansprüche

1. Zusammensetzung zum Beschichten eines Metallsubstrats, das hergestellt und beschichtet werden soll, wobei die Zusammensetzung ein Siliciumdioxid-Bindemittel umfasst, **dadurch gekennzeichnet, dass** das Verhältnis der Pigment-Volumenkonzentration zur kritischen Pigment-Volumenkonzentration der Zusammensetzung kleiner als 1 ist und das Bindemittel ein wässriges Siliciumdioxidsol und gegebenenfalls eine geringe Menge an Alkalimetallsilicat umfasst, wobei die Siliciumdioxid- und/oder Silicat-Teilchen eine durchschnittliche Größe von größer als 10 nm haben und das Bindemittel ein SiO_{2/}M₂O-Stoffmengenverhältnis von wenigstens 6:1 hat, wobei M die gesamten Alkalimetall- und Ammoniumionen darstellt.

2. Beschichtungszusammensetzung gemäß Anspruch 1, **dadurch gekennzeichnet, dass** die Pigment-Volumenkonzentration zwischen 40 % und 55 % liegt.

3. Beschichtungszusammensetzung gemäß den Ansprüchen 1 oder 2, **dadurch gekennzeichnet, dass** das Bindemittel ein Siliciumdioxidsol mit einem SiO₂/M₂O-Stoffmengenverhältnis von wenigstens 25:1 ist.

4. Beschichtungszusammensetzung gemäß irgendeinem der Ansprüche 1 bis 3, **dadurch gekennzeichnet, dass** das Bindemittel kolloidale Siliciumdioxid-Teilchen mit einer durchschnittlichen Teilchengröße zwischen 10 nm und 22 nm umfasst.

5. Beschichtungszusammensetzung gemäß Anspruch 4, **dadurch gekennzeichnet, dass** das Bindemittel kolloidale Siliciumdioxid-Teilchen mit einer durchschnittlichen Teilchengröße zwischen 10 nm und 16 nm umfasst.

6. Beschichtungszusammensetzung gemäß Anspruch 5, **dadurch gekennzeichnet, dass** das wässrige Siliciumdioxidsol einen pH im Bereich von 9,5 bis 11 hat.

7. Beschichtungszusammensetzung gemäß irgendeinem der Ansprüche 1 bis 6, **dadurch gekennzeichnet, dass** die Grundierung weiterhin 0 bis 30 Gew.-% eines organischen Harzes, bezogen auf festes Bindemittel, umfasst.

8. Beschichtungszusammensetzung gemäß Anspruch 7, **dadurch gekennzeichnet, dass** die Grundierung weiterhin 10 bis 20 Gew.-% eines organischen Harzes, bezogen auf festes Bindemittel, umfasst.

9. Beschichtungszusammensetzung gemäß irgendeinem der Ansprüche 1 bis 8, **dadurch gekennzeichnet, dass** das Bindemittel ein Aluminiumoxidoberflächenmodifiziertes wässriges Siliciumdioxidsol umfasst.

10. Beschichtungszusammensetzung gemäß Anspruch 9, **dadurch gekennzeichnet, dass** das Bindemittel 0,05 bis 2,5 Gew.-% Aluminiumoxid - berechnet als Gewichtsprozentgehalt an Al₂O₃-, bezogen auf die Siliciumdioxidsol-Teilchen in der Zusammensetzung, umfasst.

11. Beschichtungszusammensetzung gemäß irgendeinem der Ansprüche 1 bis 10, **dadurch gekennzeichnet, dass** sie eine Fertigungsbeschichtung auf wässriger Basis ist.

12. Beschichtungszusammensetzung gemäß irgendeinem der Ansprüche 1 bis 11, **dadurch gekennzeichnet, dass** die Beschichtung weiterhin Zinkpulver und/oder eine Zinklegierung umfasst.

13. Fertigungsbeschichtung auf wässriger Basis zum Beschichten von Stahlsubstraten, die hergestellt und beschichtet werden sollen, wobei die Zusammensetzung einen Feststoffgehalt von 20 - 40 Vol.-% hat und das Verhältnis der Pigment-Volumenkonzentration zur kritischen Pigment-Volumenkonzentration der Zusammensetzung kleiner als 1 ist, umfassend:
- ein wässriges Siliciumdioxidsol-Bindemittel mit einem SiO₂/M₂O-Stoffmengenverhältnis von wenigstens 6:1 und einem pH zwischen 9,5 und 11, wobei M die gesamten Alkalimetall- und Ammoniumionen darstellt, und wobei die gegebenenfalls Aluminiumoxidmodifizierten Siliciumdioxidteilchen eine durchschnittliche Größe zwischen 10 nm und 16 nm haben,
- 10 - 55 Vol.-% - der Beschichtung auf Trockenfilmbasis - Zinkpulver und/oder einer Zinklegierung mit einer mittleren Teilchengröße im Bereich von 2 - 12 µm,
- 0 - 35 Gew.-%, bezogen auf festes Bindemittel, eines organischen Harzes,
- 0 - 30 Gew.-%, bezogen auf festes Bindemittel, eines Silan-Kupplungsmittels,
- gegebenenfalls ein Nichtzink-Pigment (Nichtzink-Pigmente) und
- gegebenenfalls ein Mittel zur Verlängerung der Gebrauchsdauer.

14. Verfahren zum Grundieren eines Stahlsubstrats, wobei das Metall mit einer Beschichtungszusammensetzung gemäß irgendeinem der Ansprüche 1 bis 12 grundiert wird, die unter Verwendung von Siliciumdioxidsol hergestellt wird, dessen pH auf 9,5 bis 11 eingestellt wird.

15. Verfahren zum Grundieren eines Stahlsubstrats, wobei das Metall mit einer Beschichtungszusammensetzung gemäß irgendeinem der Ansprüche 1 bis 12 grundiert wird und wobei, nachdem die Grundierung in dem Maße getrocknet ist, dass sie sich beim Berühren trocken anfühlt, dieselbe gegebenenfalls mit einer Filmverfestigungs-Lösung behandelt wird.

16. Verfahren zum Grundieren eines Stahlsubstrats, wobei das Metall mit einer Beschichtungszusammensetzung gemäß irgendeinem der Ansprüche 1 bis 12 grundiert wird und wobei, nachdem die Grundierung in dem Maße getrocknet ist, dass sie sich beim Berühren trocken anfühlt, das beschichtete Substrat in Wasser getaucht wird oder alternativ dazu in einer Atmosphäre mit einer relativen Feuchtigkeit von wenigstens 50 % gehalten wird.

## Revendications

1. Composition de revêtement d'un substrat métallique qui est destiné à être fabriqué et recouvert, ladite composition comprenant un liant de silice, **caractérisée en ce que** le rapport de la concentration en volume du pigment à la concentration en volume critique du pigment de ladite composition est inférieur à 1 et **en ce que** le liant comprend un sol siliceux aqueux et, facultativement, une quantité mineure de silicate de métaux alcalins, avec les particules de silice et/ou silicate ayant une taille moyenne supérieure à 10 nm et **en ce que** ledit liant présente un rapport molaire SiO₂/M₂O d'au moins 6:1, dans laquelle M représente le nombre total d'ions de métaux alcalins et d'ammonium.

2. Composition de revêtement selon la revendication 1, **caractérisée en ce que** la concentration en volume du pigment est entre 40 à 55%.

3. Composition de revêtement selon la revendication 1 ou la revendication 2, **caractérisée en ce que** le liant est un sol siliceux dont le rapport molaire de SiO₂/M₂O est au moins 25:1.

4. Composition de revêtement selon l'une quelconque des revendications 1 à 3, **caractérisée en ce que** le liant comprend des particules de silice colloïdales avec une granulométrie moyenne comprise entre 10 à 22 nm.

5. Composition de revêtement selon la revendication 4, **caractérisée en ce que** le liant comprend des particules de silice colloïdales avec une granulométrie moyenne comprise entre 10 et 16 nm.

6. Composition de revêtement selon la revendication 5, **caractérisée en ce que** le sol siliceux aqueux présente un pH dans l'intervalle de 9,5 à 11.

7. Composition de revêtement selon l'une quelconque des revendications 1 à 6, **caractérisée en ce que** le revêtement primaire comprend en outre de 0 à 30% en poids d'une résine organique, sur base du liant solide.

8. Composition de revêtement selon la revendication 7, **caractérisée en ce que** le revêtement primaire comprend en outre de 10 à 20% en poids d'une résine organique, sur base du liant solide.

9. Composition de revêtement selon l'une quelconque des revendications 1 à 8, **caractérisée en ce que** le liant comprend un sol siliceux aqueux modifié en surface par de l'alumine.

10. Composition de revêtement selon la revendication 9, **caractérisée en ce que** le liant comprend de 0,05 à 2,5% en poids d'alumine, calculé comme le pourcentage en fonction du poids de Al₂O₃, sur base des particules de sol siliceux dans la composition.

11. Composition de revêtement selon l'une quelconque des revendications 1 à 10, **caractérisée en ce qu'**il s'agit d'un primaire à appliquer en atelier à l'eau.

12. Composition de revêtement selon l'une quelconque des revendications 1 à 11, **caractérisée en ce que** le revêtement comprend en outre de la poudre de zinc et/ou un alliage de zinc.

13. Primaire à appliquer en atelier à l'eau pour le revêtement de substrats d'acier qui sont destinés à être fabriqués et recouverts avec dépassement, ladite composition ayant une teneur en solides de 20 à 40% en volume, dans lequel le rapport de la concentration en volume du pigment à la concentration en volume critique du pigment est inférieur à 1, comprenant :
un liant à base de sol siliceux aqueux ayant un rapport molaire de SiO₂/M₂O d'au moins 6:1 et un pH entre 9,5 et 11, dans laquelle M représente le nombre total d'ions de métaux alcalins et d'ammonium et dans laquelle les particules de silice facultativement modifiées avec de l'alumine présentent une granulométrie moyenne comprise entre 10 nm et 16 nm,
de 10 à 55% en volume de revêtement sur une base de film sec de poudre de zinc et/ou un alliage de zinc ayant une granulométrie moyenne dans l'intervalle de 2 à 12 µm,
de 0 à 35% en poids, sur base du liant solide, d'une résine organique,
de 0 à 30% en poids, sur base du liant solide, d'un agent de couplage de silane,
facultativement des pigment(s) ne comprenant pas de zinc, et
facultativement un produit d'extension de la vie en pot.

14. Procédé de revêtement d'un primaire sur un substrat d'acier dans lequel le métal est recouvert d'un primaire ayant une composition de revêtement selon l'une quelconque des revendications 1 à 12 qui est préparée en utilisant un sol siliceux dont le pH est ajusté à un pH compris entre 9,5 à 11.

15. Procédé de revêtement d'un primaire sur un substrat d'acier dans lequel le métal est recouvert d'un primaire ayant une composition de revêtement selon l'une quelconque des revendications 1 à 12 et dans lequel une fois que le revêtement primaire est sec au toucher, il est facultativement traité avec une solution de renforcement de film.

16. Procédé de revêtement d'un primaire sur un substrat d'acier dans lequel le métal est recouvert avec un primaire ayant une composition de revêtement selon l'une quelconque des revendications 1 à 12 et dans lequel une fois que le primaire est sec au toucher, le substrat recouvert est immergé dans de l'eau ou en variante maintenu dans une atmosphère présentant une humidité relative d'au moins 50%.
